(19) Europäisches Patentamt
European Patent Office
Office européen des brevets

(11) **EP 3 069 045 B1**

(12) **FASCICULE DE BREVET EUROPEEN**

(45) Date de publication et mention
de la délivrance du brevet:
**28.08.2019 Bulletin 2019/35**

(21) Numéro de dépôt: **14821700.3**

(22) Date de dépôt: **13.11.2014**

(51) Int Cl.:
***F16F 15/14*** *(2006.01)*

(86) Numéro de dépôt international:
**PCT/FR2014/052895**

(87) Numéro de publication internationale:
**WO 2015/071601 (21.05.2015 Gazette 2015/20)**

(54) **DISPOSITIF SIMPLIFIE D'AMORTISSEMENT DE TORSION A PENDULE**

VEREINFACHTE TORSIONSDÄMPFUNGSVORRICHTUNG MIT EINEM PENDEL

SIMPLIFIED TORSION DAMPING DEVICE HAVING A PENDULUM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.11.2013 FR 1361175**

(43) Date de publication de la demande:
**21.09.2016 Bulletin 2016/38**

(73) Titulaire: **Valeo Embrayages
80009 Amiens Cedex 2 (FR)**

(72) Inventeur: **VERHOOG, Roel
F-60190 Gournay sur Aronde (FR)**

(74) Mandataire: **Cardon, Nicolas et al
Valeo Embrayages
Sce Propriété Intellectuelle
Le Delta
14, avenue des Béguines
95892 Cergy Pontoise Cedex (FR)**

(56) Documents cités:
DE-A1-102009 037 481    DE-A1-102011 088 925
FR-A- 1 045 551    GB-A- 2 413 614

**Description**

La présente invention concerne un dispositif simplifié d'amortissement de torsion destiné à être relié à un moteur à explosion, de type oscillateur pendulaire.

On connaît dans l'état de la technique des dispositifs d'amortissement de torsion de type pendulaire, encore appelés oscillateurs pendulaires ou pendules, qui équipent notamment mais non exclusivement la transmission d'un véhicule automobile.

Dans une transmission de véhicule automobile, on associe généralement au moins un dispositif d'amortissement de torsion à un embrayage apte à relier sélectivement le moteur à la boîte de vitesses, tel qu'un embrayage à friction ou un dispositif d'accouplement hydrocinétique comportant un embrayage de verrouillage, et cela afin de filtrer les vibrations dues aux acyclismes du moteur.

En effet, un moteur à explosion présente des acyclismes du fait des explosions se succédant dans le cylindre du moteur, ces acyclismes variant notamment en fonction du nombre de cylindres.

Les moyens amortisseurs d'un dispositif d'amortissement de torsion ont par conséquent pour fonction de filtrer les vibrations engendrées par les acyclismes et interviennent avant la transmission du couple moteur à la boîte de vitesses.

A défaut, des vibrations pénétrant dans la boîte de vitesses y provoqueraient en fonctionnement des chocs, bruits ou nuisances sonores particulièrement indésirables.

C'est une des raisons pour lesquelles, on utilise un ou plusieurs moyens d'amortissement aptes à filtrer les vibrations à au moins une fréquence déterminée.

Le document US-2010/0122605 représente un dispositif d'amortissement de type pendulaire. GB2413614 A, DE102011088925 A1 et DE102009037481A1 représentent aussi des dispositifs d'amortissement avec des pendules monofilaires ou bifilaires avec des éléments liant les masses oscillantes adjacentes.

Le dispositif d'amortissement comprend au moins un support, couplé en rotation à un arbre du moteur, et au moins une masse oscillante, généralement plusieurs masses oscillantes réparties circonférentiellement sur le support. Les oscillations de ces masses oscillantes génèrent un couple oscillant qui s'oppose au couple oscillant venant du moteur et ainsi absorbe une partie des acyclismes du moteur. Le support, parfois appelé rondelle de phasage du dispositif d'amortissement de torsion, est typiquement solidaire de l'arbre moteur.

Chaque masse oscillante est en général constituée par une paire de masselottes, disposées de part et d'autre du support, et solidaires entre elles, soit par une liaison mécanique directe, à travers typiquement un évidement du support, soit par l'intermédiaire d'une entretoise. Un tel ensemble de deux masselottes solidaires en vis-à-vis, avec ou sans entretoise, est considéré dans ce qui suit comme une masse oscillante unique.

Alternativement, chaque masse oscillante peut être une masselotte unique montée mobile sur le support. Le support peut dans ce cas optionnellement être formé par deux éléments, les masses oscillantes étant disposées mobiles entre ces deux éléments.

Une telle masse oscillante est très généralement montée mobile sur le support, par l'intermédiaire d'au moins un élément de roulement, typiquement par deux éléments de roulements, voire davantage.

Typiquement, le centre de masse de chaque masse oscillante est libre d'osciller autour d'un axe d'oscillation sensiblement parallèle à l'axe de rotation de l'arbre moteur et entraîné en rotation autour de cet axe de rotation.

En réaction aux irrégularités de rotation, les masses oscillantes se déplacent de manière à ce que le centre de masse de chacune d'elles oscille autour de cet axe d'oscillation.

La position radiale du centre de masse de chacune des masses oscillantes par rapport à l'axe de rotation de l'arbre moteur, comme la distance de ce centre de gravité par rapport à l'axe d'oscillation, sont établies de manière à ce que, sous l'effet des forces centrifuges, la fréquence d'oscillation de chacune des masses oscillantes soit proportionnelle à la vitesse de rotation de l'arbre moteur, ce multiple pouvant par exemple prendre une valeur proche du rang de l'harmonique prépondérant des acyclismes.

La recherche d'une filtration des vibrations toujours plus performante conduit à perfectionner les dispositifs d'amortissement de torsion de type pendulaire.

On a constaté notamment que l'utilisation d'un pendule comprenant deux éléments de roulement (ou rouleaux) par masse oscillante, appelé « pendule bifilaire » permettait d'obtenir des performances d'amortissement supérieures à celles d'un pendule comprenant un seul élément de roulement par masse oscillante, appelé « pendule monofilaire ».

L'état de la technique conduit donc à faire un choix entre l'utilisation d'un pendule bifilaire performant mais de construction complexe, et un pendule monofilaire de construction relativement simple, mais de performances relativement modestes.

L'un des buts de l'invention est de pouvoir réaliser un dispositif d'amortissement de torsion de type à pendule, présentant une grande simplicité de construction, proche de celle d'un pendule monofilaire, qui permette cependant d'obtenir des performances d'amortissement proches de celles d'un pendule bifilaire.

A cet effet, un objet de l'invention est un dispositif destiné à être relié à un moteur à explosion, ce dispositif comprenant un support mobile en rotation autour d'un axe, et un ensemble de masses oscillantes pendulaires montées mobiles sur ce support, chacune des masses oscillantes de l'ensemble étant intercalée circonférentiellement entre une première masse oscillante qui lui est adjacente et une seconde masse oscillante qui lui est adjacente, et formant avec ces deux masses adjacentes un groupe de trois masses oscillantes circonférentiellement consécutives appartenant audit ensemble, dites ci-après respectivement masse intercalée, première masse adjacente, et seconde masse adjacente.

dans lequel chacune des masses oscillantes de l'ensemble est montée mobile sur le support au moyen d'un élément de roulement unique associé à cette masse oscillante, et que pour tout groupe de trois masses oscillantes circonférentiellement consécutives, la masse intercalée comprend :

- un premier bord d'extrémité apte, lors d'une rotation du dispositif, à venir en contact glissant sensiblement circonférentiel avec un bord d'extrémité de la première masse adjacente;
- un second bord d'extrémité apte, lors d'une rotation du dispositif, à venir en contact glissant sensiblement circonférentiel avec un bord d'extrémité de la seconde masse adjacente,

le bord d'extrémité de la première masse adjacente ou de la seconde masse adjacente étant apte, lors d'une rotation du dispositif, à la retenue radiale, respectivement, du premier ou du second bord d'extrémité de la masse intercalée, et dans lequel pour chacune des masses oscillantes, l'élément de roulement est roulant sur le support et sur la masse oscillante.

. Dans ce qui suit, le terme masse oscillante pendulaire (ou masse intercalée, première masse adjacente, ou seconde masse adjacente) désigne toute masse oscillante pendulaire dont l'élément ou les éléments constitutifs sont solidaires mécaniquement. Cela concerne notamment deux masselottes solidaires entre elles (par exemple par l'intermédiaire d'une entretoise), typiquement disposées de part et d'autre du support, ainsi, le cas échéant, que l'entretoise. Le terme masse pendulaire s'applique également à d'autres géométries de masses mécaniquement solidaires, par exemple à une masselotte unique disposée le long d'un support, ou entre deux éléments d'un même support.

L'élément de roulement peut être tout élément roulant adéquat, par exemple un rouleau à diamètre unique ou à plusieurs diamètres correspondant à des chemins de roulements différents, par exemple sur le support et sur les masselottes.

Dans un exemple de réalisation de l'invention, l'élément de roulement est inséré au travers d'un évidement formé par le support. Ainsi, l'élément de roulement est apte à rouler le long d'un premier chemin de roulement formé par l'entretoise et le long d'un second chemin de roulement formé par une bordure délimitée par l'évidement du support. L'élément de roulement est apte à rouler sur le support et sur l'entretoise. Dans un pendule bifilaire conventionnel, toute masse oscillante pendulaire est en contact avec deux éléments de roulement, et est retenue radialement (retenue d'un éloignement radial), en deux zones qui sont les lieux des points de contact de cette masse avec les deux éléments de roulement. Ceci assure à la fois la stabilité de la masse dans son mouvement pendulaire (en empêchant notamment tout pivotement non contrôlé), et l'obtention d'un effet bifilaire, source d'une efficacité d'amortissement supérieure à celle d'un pendule monofilaire à élément de roulement unique.

Selon l'invention, par rapport à une masse oscillante d'un pendule bifilaire conventionnel, l'un des éléments de roulement est supprimé, et l'effet de retenue radiale correspondant ainsi supprimé est obtenu par un contact glissant sensiblement circonférentiel avec l'une des masses adjacentes. Ceci induit donc des frottements, typiquement indésirables, parfois désignés par l'homme du métier comme « sources d'hystérésis » (ou d'irréversibilités).

Toutefois, l'effet d'hystérésis induit par ce contact glissant est relativement, voire très limité selon l'invention, car l'ensemble des masses oscillantes pendulaires du dispositif selon l'invention fonctionnent de façon coordonnée, de sorte que la course d'un point de contact glissant est bien inférieure à la course du point de contact correspondant de la masse pendulaire avec l'élément de roulement unique. En d'autres termes, l'élément de roulement roule avec un débattement du point de contact avec le chemin de roulement sur la masse oscillante qui est bien plus important que le débattement d'un point de contact glissant correspondant.

Ainsi, les première et seconde masse adjacentes ont typiquement, à un instant donné, un mouvement circonférentiel coordonné avec celui de la masse intercalée et sensiblement dans le même sens (mouvement de rotation collectif), et/ou un mouvement de pivotement également coordonné et dans le même sens, et/ou un mouvement de déplacement radial également coordonné et dans le même sens (centrifuge ou centripète), de sorte que le mouvement relatif au point de contact glissant entre la masse intercalée et l'une quelconque des première et seconde masse adjacente a une amplitude nettement plus faible que celle du mouvement de la masse intercalée.

Si l'on considère maintenant l'ensemble des masses oscillantes, celles-ci ont typiquement, à un instant donné, un mouvement circonférentiel coordonné, par exemple dans le sens horaire, et un mouvement de pivotement coordonné et/ou un mouvement radial coordonné (par exemple centripète).

L'invention permet donc d'obtenir un mouvement cinématique coordonné des masses oscillantes qui est sensiblement voisin de celui des masses oscillantes d'un pendule bifilaire conventionnel comprenant des masses oscillantes reliées entre elles. L'effet limité du frottement (du fait d'un débattement faible des points de contact glissants) permet en effet de réduire fortement l'écart de fonctionnement cinématique du dispositif selon l'invention avec le pendule bifilaire précité.

Le dispositif selon l'invention permet donc d'obtenir une performance d'amortissement voisine de celle d'un pendule bifilaire, en divisant par deux le nombre d'éléments de roulement.

De plus, les différentes masses oscillantes sont en contact entre elles, donc adjacentes (voir même imbriquées deux à deux comme on l'observera sur les figures annexées), ce qui permet d'utiliser au mieux tout l'espace circonférentiel pour disposer la masse oscillante globale, qui peut donc être accrue. Dans un système pendulaire à masses indépendantes, il faut au contraire prévoir un espace fonctionnel libre entre deux masses pendulaires circonférentiellement consécutives, espace non utilisé pour installer une partie de la masse pendulaire globale. La situation est similaire lorsque l'on utilise des masses pendulaires reliées par des éléments de liaison non pendulaires.

Par conséquent, la masse pendulaire globale peut être typiquement augmentée dans le dispositif selon l'invention, ce qui améliore l'amortissement (ou permet alternativement de disposer la même masse pendulaire globale dans un espacement plus réduit).

De préférence, pour toute masse oscillante, l'élément de roulement unique associé est apte à rouler sur un chemin de roulement de cette masse oscillante, la trace des points de contact entre l'élément de roulement et le chemin de roulement dans un plan perpendiculaire à l'axe comprenant un point médian qui est décalé angulairement par rapport au centre de masse de la masse oscillante. On a en effet constaté que cette disposition permettait d'accroître la stabilité du dispositif pendulaire.

De préférence, chaque point de la trace est décalé angulairement par rapport au centre de masse de la masse oscillante dans une même direction circonférentielle, pour une stabilité encore augmentée.

Typiquement encore, le point médian, et de préférence tout point de la trace correspondant à une masse oscillante est décalé dans la même direction circonférentielle pour toutes les masses oscillantes.

Selon une disposition préférée, pour toute masse intercalée :

- le point médian de la trace est décalé vers la première masse adjacente;
- le premier bord d'extrémité est un bord apte, lors d'une rotation du dispositif, à la retenue radiale dudit bord d'extrémité de la première masse adjacente.
- le bord d'extrémité de la seconde masse adjacente est un bord apte, lors d'une rotation du dispositif, à la retenue radiale du second bord d'extrémité de la masse intercalée.

Ainsi, la force centrifuge s'exerce sur la masse intercalée selon un axe passant entre le point médian d'une part (point de retenue radiale par l'élément de roulement) et le bord d'extrémité de la seconde masse adjacente (formant retenue radiale du second bord d'extrémité de la masse intercalée). La masse intercalée est donc stable, la force centrifuge s'exerçant entre les deux éléments de retenue radiale.

De préférence, pour une masse intercalée et de préférence pour toute masse oscillante la relation suivante est vérifiée :

$$0,5 \times R1 < R2 < 2 \times R1,$$

dans laquelle:

R1 est le rayon de courbure de la trace au point médian ;
R2 est le rayon de courbure dudit bord d'extrémité de ladite seconde masse adjacente au point de contact avec le second bord d'extrémité de la masse intercalée lorsque l'élément de roulement est en contact avec le point médian.

Ceci améliore la stabilité dynamique du dispositif, et ses performances d'amortissement.

Selon une autre disposition préférée, pour une masse oscillante et de préférence pour toute masse oscillante la relation suivante est vérifiée :

$$2 \, CH \times DM < FC \times d < 5 \, CH \times DM ;$$

avec:

FC est la force centrifuge exercée sur la masse oscillante lors d'une rotation du dispositif à 1000 tours/minute.

- d est la distance du centre de masse de la masse oscillante à un axe passant, lorsque l'élément de roulement est en contact avec le point médian, par ce point médian d'une part et par un point de contact associé de l'élément de roulement avec le support d'autre part.
- CH est la force de frottement de la masse oscillante avec le support lors d'une accélération axiale maximale du support induite par la vibration du dispositif en rotation.
- DM est la distance maximale du centre de masse de la masse oscillante à un axe passant par un point de contact entre la masse oscillante et le support, cet axe étant perpendiculaire à une direction radiale en ce point de contact.

On a constaté que cette relation permettait d'éviter avec une grande fiabilité toute perturbation du fonctionnement du dispositif du fait du frottement entre la masse oscillante et le support induite par les vibrations axiales de ce dernier en fonctionnement.

Typiquement, pour une masse oscillante, et de préférence pour toute masse oscillante, d est compris entre 2 mm et 12 mm, et de préférence entre 3,5 mm et 8 mm.

Typiquement également, toute masse intercalée est apte à effectuer un débattement sensiblement circonférentiel avec chacune des première et seconde masses adjacentes compris entre 0,5 mm et 6 mm, et de préférence entre 1,5 mm et 3,5 mm.

Selon une autre disposition préférée, le nombre N de masses oscillantes est un nombre impair supérieur ou égal à 3, de préférence égal à 5 ou à 7. On a en effet constaté que la stabilité du fonctionnement du dispositif était encore augmentée avec un nombre impair de masses oscillantes, les nombres préférés étant 5 et 7, qui permettent d'obtenir une grande stabilité, avec une conception mécanique relativement simple.

Un autre objet de l'invention est enfin un embrayage, simple, double, ou multiple comprenant un dispositif d'amortissement de torsion, tel que précédemment défini.

L'invention sera mieux comprise à la lecture de la description qui va suivre, donnée uniquement à titre d'exemple et faite en se référant aux dessins dans lesquels :

- La figure 1 représente une vue axiale simplifiée d'une partie d'un dispositif d'amortissement de torsion selon l'invention, appartenant à un embrayage, comprenant un support de pendule et plusieurs masselottes pendulaires montées sur ce support.
- La figure 2 est une vue similaire à celle de la figure 1, le dispositif d'amortissement étant dans une configuration différente de son fonctionnement.
- La figure 3 est une vue similaire à celle de la figure 1, dans laquelle figurent certains éléments non représentés sur la figure 1.

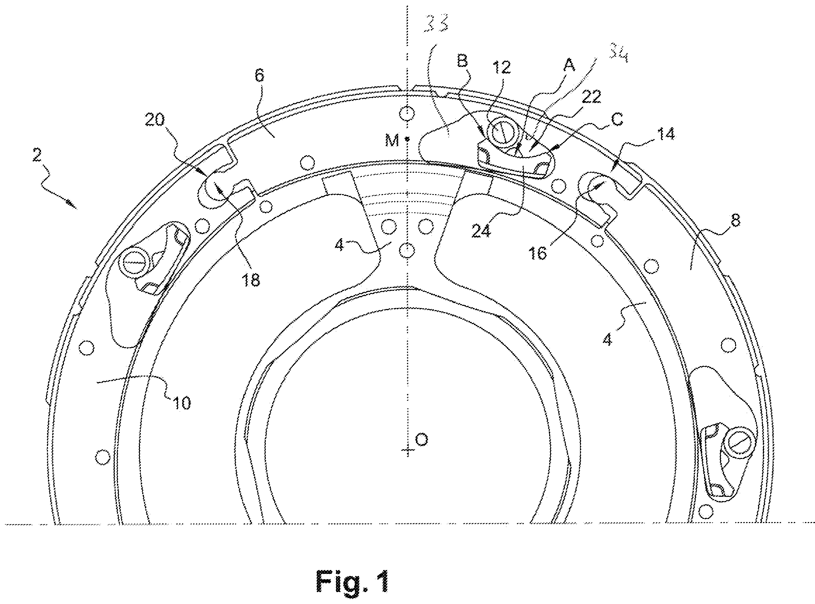

On se réfère maintenant à la figure 1, sur laquelle est représentée, de façon schématique et partielle un dispositif d'amortissement de torsion 2, comprenant un support 4, comprenant une partie périphérique de forme générale plane annulaire, sur lequel sont montées mobiles une pluralité de masses oscillantes pendulaires réparties circonférentiellement sur ce support 4.

Le support 4, parfois appelé « rondelle de phasage » du dispositif d'amortissement de torsion est monté mobile autour d'un axe perpendiculaire au plan de la figure, passant par le point O, ci-après dénommé axe si aucune précision complémentaire n'est fournie. Le support 4 supporte des masses oscillantes pendulaires comprenant chacune de deux masselottes présentant la même position angulaire par rapport à l'axe, disposées de part et d'autre de ce support 4, ainsi qu'une entretoise de liaison entre les masselottes.

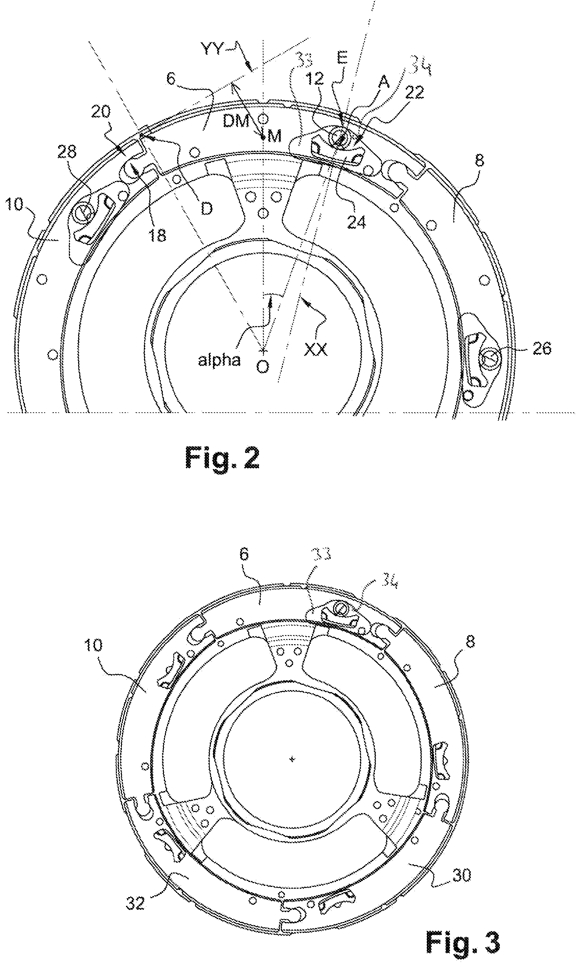

Sur la figure 1, la figure 2, et sur une partie de la figure 3, une seule des masselottes est représentée pour chaque masse oscillante pendulaire. Une telle masselotte est en fait disposée en arrière-plan derrière le support 4, et n'est en fait visible sur ces figures que par une représentation graphique artificielle destinée à mieux visualiser le fonctionnement pendulaire du dispositif. Les numéros de référence correspondants indiqués ci-après s'appliquent systématiquement à une masse oscillante pendulaire et non à chacune des masselottes, même si seule une masselotte est représentée.

Chacune des masses oscillantes de l'ensemble est intercalée circonférentiellement entre une première masse oscillante qui lui est adjacente et une seconde masse oscillante qui lui est adjacente, et forme avec ces deux masses adjacentes un groupe de trois masses oscillantes circonférentiellement consécutives appartenant audit ensemble, dites ci-après respectivement masse intercalée 6, première masse adjacente 8, et seconde masse adjacente 10.

On comprendra, et ceci sera mieux explicité dans la description de la figure 3, que chaque masse pendulaire du dispositif est une masse intercalée entre deux autres masses pendulaires, mais peut aussi être considérée comme une « première masse adjacente » ou une « seconde masse adjacente », selon le choix qui est fait de l'ensemble de trois masses oscillantes consécutives (et donc de la masse dite intercalée).

Chacune des masses oscillantes de l'ensemble est montée mobile sur le support 4 au moyen d'un élément de roulement unique 12 associé à cette masse oscillante, et pour tout groupe de trois masses oscillantes circonférentiellement consécutives, la masse intercalée 6 comprend :

- un premier bord d'extrémité 14 apte lors d'une rotation du dispositif à venir en contact glissant sensiblement circonférentiel avec un bord d'extrémité 16 de la première masse adjacente 8;
- un second bord d'extrémité 18 apte lors d'une rotation du dispositif à venir en contact glissant sensiblement circonférentiel avec un bord d'extrémité 20 de la seconde masse adjacente 10 ;

La masse intercalée 6 comprend également, outre deux masselottes, une entretoise 24 reliant les deux masselottes. Le support 4 présente un évidement 33 au travers duquel est disposée l'entretoise 24. Les deux masselottes de la masse intercalée 6 sont situées de part et d'autre du support 4.

L'élément de roulement 12 unique associé à la masse intercalée 6 est apte à rouler sur un chemin de roulement 22 de cette masse intercalée 6, disposé sur l'entretoise 24.

L'élément de roulement 12 est logé dans l'évidement 33 du support 4. L'élément de roulement 12 est apte à rouler en même temps sur l'entretoise 24 comme précédemment mentionné et sur le support 4 par contact de ce même élément de roulement 12 sur une bordure 34 délimitant l'évidement 33 du support 4.

La trace des points de contact entre cet élément de roulement 12 et le chemin de roulement 22 dans un plan perpendiculaire à l'axe passe par un point médian A qui est décalé angulairement par rapport au centre de masse M de la masse intercalée 6. Cette trace forme une portion de courbe entre les points B et C. On peut également constater que chaque point de la trace est décalé angulairement par rapport au centre de masse M de la masse 6 dans une même direction circonférentielle (décalage angulaire par rapport à l'axe OM).

Lorsque la force centrifuge s'exerce sur la masse intercalée 6, elle s'exerce selon l'axe OM. Par conséquent, la masse intercalée 6, qui est retenue radialement par le contact roulant avec l'élément de roulement 12, dans une zone disposée angulairement à droite de l'axe OM sur la figure 1, doit aussi être retenue radialement à gauche de l'axe OM. Ceci est réalisé par le bord d'extrémité 20 de la seconde masse adjacente 10, qui forme un bord de retenue radiale du second bord d'extrémité 18 de la masse intercalée 6.

De façon analogue, le premier bord d'extrémité 14 de la masse intercalée 6 est un bord apte, lors d'une rotation du dispositif, à la retenue radiale du bord d'extrémité 16 de la première masse adjacente 8.

Le point médian A, et typiquement tout point de la trace correspondant à une masse oscillante (considérée comme une masse intercalée) est décalé dans la même direction circonférentielle pour toutes les masses oscillantes, soit dans le sens horaire selon la représentation de la figure 1.

Pour toute masse intercalée du dispositif (ceci s'appliquant aussi bien aux masses 8 et 10, considérées chacune en tant que masse intercalée) :

- le point médian de la trace correspondante est décalé vers la première masse adjacente correspondante;
- le premier bord d'extrémité est un bord apte, lors d'une rotation du dispositif, à la retenue radiale du bord d'extrémité de la première masse adjacente correspondante.
- le bord d'extrémité de la seconde masse adjacente correspondante est un bord apte lors d'une rotation du dispositif à la retenue radiale du second bord d'extrémité de la masse intercalée.

On se réfère maintenant à la figure 2, qui représente le même dispositif que celui de la figure 1, mais dans une configuration différente de celle de la figure 1 : Sur la figure 2, l'élément de roulement 12 est en contact au point médian A avec l'entretoise 24 de la masse intercalée 6.

On a, sur la figure 2, référencé en sus les éléments de roulement 26 et 28 correspondant aux première et seconde masses adjacentes 8 et 10, et indiqué des précisions géométriques explicitées ci-après.

Considérons le fonctionnement du dispositif, par exemple lors d'une variation du couple moteur en partant de la configuration de la figure 2.

Du fait d'une sollicitation en accélération de la rotation du support, toutes les masses oscillantes 6, 8, 10 etc... prennent un mouvement de rotation, de façon coordonnée (collectivement), par exemple en sens horaire pour atteindre la configuration de la figure 1, puis (éventuellement) une configuration de débattement maximum dans laquelle l'élément de roulement 12 est en contact avec le point B. Le mouvement s'inverse alors, et toutes les masses oscillantes 6, 8, 10 etc... tournent alors collectivement en sens anti-horaire pour atteindre la configuration de la figure 2, puis (éventuellement) une configuration de débattement maximum dans laquelle le rouleau 12 est en contact avec le point C. Le mouvement s'inverse alors à nouveau et ainsi de suite. Les débattements n'atteignent les valeurs maximales (contact de l'élément de roulement 12 aux points B et C) que lors de sollicitations extrêmes requérant un amortissement maximal.

Les mouvements des masses oscillantes comprennent donc des mouvements coordonnés (collectifs) de rotation, dans le même sens pour toutes les masses oscillantes à un instant donné. Mais le mouvement des masses oscillantes est en fait très généralement plus complexe, et comprend d'autres composantes de mouvement collectif qu'une simple rotation, typiquement un mouvement radial coordonné (collectif) et/ou un pivotement coordonné (collectif).

Ces autres mouvements coordonnés (collectifs) sont cependant typiquement de débattement relatif entre deux masses adjacentes relativement faible par rapport au mouvement de rotation, de sorte que le glissement relatif au niveau des contacts glissants tels qu'entre les éléments 14 et 16, ou bien entre les éléments 18 et 20 est relativement limité, ce qui réduit les frottements.

De préférence, pour une, ou pour toute masse intercalée 6 (donc également pour les autres masses oscillantes 8, 10, etc..., en adaptant la définition des première et seconde masses adjacentes), la relation suivante est vérifiée :

$$0, 5 \times R1 < R2 < 2 \times R1,$$

dans laquelle :

R1 est le rayon de courbure de la trace au point médian A ;
R2 est le rayon de courbure du bord d'extrémité 20 de ladite seconde masse oscillante adjacente au point de contact avec le second bord d'extrémité 18 de la masse intercalée lorsque l'élément de roulement 12 est en contact avec le point médian A.

On a trouvé que le respect de la relation ci-dessus améliorait de façon inattendue l'efficacité d'amortissement du dispositif.

Le dispositif est par ailleurs avantageusement configuré de façon que la seconde relation qui suit est aussi vérifiée, pour une masse oscillante, et de préférence pour toute masse oscillante:

$$2 \, CH \times DM < FC \times d < 5 \; CH \times DM,$$

dans laquelle :

- FC est la force centrifuge exercée sur la masse oscillante lors d'une rotation du dispositif à 1000 tours/minute.
- d est la distance du centre de masse M de la masse oscillante à un axe XX passant, lorsque l'élément de roulement 12 est en contact avec le point médian A, par ce point médian A d'une part et par un point de contact E associé de l'élément de roulement 12 avec le support 4 d'autre part.
- CH est la force de frottement de la masse oscillante avec le support lors d'une accélération axiale maximale du support induite par la vibration du dispositif en rotation.
- DM est la distance maximale du centre de masse M de la masse oscillante 6 à un axe YY passant par un point de contact D entre la masse oscillante et le support, cet axe YY étant perpendiculaire à une direction radiale OD en ce point de contact D.

Ceci confère une grande stabilité au dispositif d'amortissement.

On a également représenté sur la figure 2 l'angle alpha du décalage angulaire du point médian A avec le centre de masse M, lorsque l'élément de roulement 12 est en contact avec la masse 6 au point A.

La figure 3 représente le même dispositif que celui des figures 1 et 2. La masse intercalée 6 y est représentée comme sur les autres figures avec une seule masselotte disposée en arrière-plan.

Pour les autres masses oscillantes 8, 10, 30, et 32 on a par contre représenté la masselotte en correspondance, située en avant du support 4.

On comprend que la masse intercalée 6 est disposée entre une première masse adjacente 8 et une seconde masse adjacente 10. Par contre, si l'on considère l'ensemble des trois masses 6, 8, et 30, la masse 8 est la « masse intercalée », la masse 30, la « première masse adjacente », et la masse 6 la « seconde masse adjacente ». Les dénominations : masse intercalée, première et seconde masse adjacente sont donc relatives au choix d'un ensemble quelconque de trois masses oscillantes circonférentiellement consécutives, et n'ont pas un caractère absolu.

De façon plus générale, l'homme du métier pourra, sans sortir du cadre de l'invention, mettre en oeuvre cette invention selon différents modes de réalisation ou variantes compatibles avec l'invention. Il pourra également utiliser toute caractéristique adaptée connue de l'état de la technique.

**Revendications**

**1.** Dispositif d'amortissement de torsion (2) destiné à être relié à un moteur à explosion, ce dispositif comprenant un support (4) mobile en rotation autour d'un axe, et un ensemble de masses oscillantes (6, 8, 10, 30, 32) pendulaires montées mobiles sur ce support (4), chacune des masses oscillantes de l'ensemble étant intercalée circonférentiellement entre une première masse oscillante qui lui est adjacente et une seconde masse oscillante qui lui est adjacente, et formant avec ces deux masses adjacentes un groupe de trois masses oscillantes circonférentiellement consécutives appartenant audit ensemble, dites ci-après respectivement masse intercalée (6), première masse adjacente (8), et seconde masse adjacente (10).

dans lequel chacune des masses oscillantes de l'ensemble est montée mobile sur le support (4) au moyen d'un élément de roulement unique (12) associé à cette masse oscillante, et que pour tout groupe de trois masses oscillantes circonférentiellement consécutives, la masse intercalée (6) comprend :

- un premier bord d'extrémité (14) apte, lors d'une rotation du dispositif, à venir en contact glissant sensiblement circonférentiel avec un bord d'extrémité (16) de la première masse adjacente (8);
- un second bord d'extrémité (18) apte, lors d'une rotation du dispositif à venir en contact glissant sensiblement circonférentiel avec un bord d'extrémité (20) de la seconde masse adjacente (10),

le bord d'extrémité (20) de la première masse adjacente ou de la seconde masse adjacente (10) étant apte, lors d'une rotation du dispositif, à la retenue radiale, respectivement, du premier ou du second bord d'extrémité (18) de la masse intercalée (6), et

dans lequel pour chacune des masses oscillantes, l'élément de roulement est roulant sur le support et sur la masse oscillante.

2. Dispositif selon la revendication 1, dans lequel pour toute masse oscillante, l'élément de roulement unique (12) associé est apte à rouler sur un chemin de roulement (22) de cette masse oscillante, la trace des points de contact entre l'élément de roulement 12) et le chemin de roulement (22) dans un plan perpendiculaire à l'axe comprenant un point médian (A) qui est décalé angulairement par rapport au centre de masse (M) de la masse oscillante.

3. Dispositif selon la revendication 2 dans lequel chaque point de ladite trace est décalé angulairement par rapport au centre de masse (M) de la masse oscillante dans une même direction circonférentielle.

4. Dispositif selon l'une quelconque des revendications 2 et 3, dans laquelle le point médian (A), et de préférence tout point de la trace correspondant à une masse oscillante (6) est décalé dans la même direction circonférentielle pour toutes les masses oscillantes (6, 8, 10, 30, 32).

5. Dispositif selon l'une quelconque des revendications 2 à 4 dans lequel, pour toute masse intercalée (6) :

- le point médian (A) de la trace est décalé vers la première masse adjacente (8);
- le premier bord d'extrémité (14) est un bord apte, lors d'une rotation du dispositif, à la retenue radiale dudit bord d'extrémité (16) de la première masse adjacente (8).
- le bord d'extrémité (20) de la seconde masse adjacente (10) est un bord apte, lors d'une rotation du dispositif, à la retenue radiale du second bord d'extrémité (18) de la masse intercalée (6).

6. Dispositif selon la revendication 5, dans lequel, pour une masse intercalée (6) et de préférence pour toute masse oscillante (6, 8, 10, 30, 32) la relation suivante est vérifiée :

$$0,5 \times R1 < R2 < 2 \times R1,$$

dans laquelle:

R1 est le rayon de courbure de la trace au point médian (A) ;
R2 est le rayon de courbure dudit bord d'extrémité (20) de ladite seconde masse adjacente (10), au point de contact avec le second bord d'extrémité (18) de la masse intercalée (6) lorsque l'élément de roulement (12) est en contact avec le point médian (A).

7. Dispositif selon l'une quelconque des revendications 2 à 5 dans lequel, pour une masse oscillante et de préférence pour toute masse oscillante la relation suivante est vérifiée :

$$2\, C_{H\,x}\, D_M < F_{C\,x}\, d < 5\, C_{H\,x}\, D_M\,;$$

avec:

- $F_C$ est la force centrifuge exercée sur la masse oscillante lors d'une rotation du dispositif à 1000 tours/minute.
- d est la distance du centre de masse (M) de la masse oscillante (6) à un axe passant, lorsque l'élément de roulement (12) est en contact avec le point médian (A), par ce point médian (A) d'une part et par un point de contact associé (E) de l'élément de roulement (12) avec le support (4) d'autre part.
- $C_H$ est la force de frottement de la masse oscillante (6) avec le support (4) lors d'une accélération axiale maximale du support (4) induite par la vibration du dispositif en rotation.
- $D_M$ (DM) est la distance maximale du centre de masse de la masse oscillante à un axe (YY) passant par un point de contact (D) entre la masse oscillante et le support, cet axe (YY) étant perpendiculaire à une direction radiale en ce point de contact (D).

8. Dispositif selon la revendication 7, dans lequel, pour une masse oscillante et de préférence pour toute masse oscillante d est compris entre 2 mm et 12 mm, et de préférence entre 3,5 mm et 8 mm.

9. Dispositif selon l'une des revendications précédentes dans lequel toute masse intercalée (6) est apte à effectuer un débattement sensiblement circonférentiel avec chacune des première (8) et seconde (10) masses adjacentes compris entre 0,5 mm et 6 mm, et de préférence entre 1,5 mm et 3,5 mm.

10. Dispositif selon l'une quelconque des revendications précédentes dans lequel le nombre N de masses oscillantes (6, 8, 10, 30, 32) est un nombre impair supérieur ou égal à 3, de préférence égal à 5 ou à 7.

11. Embrayage comprenant un dispositif d'amortissement de torsion, dans lequel ce dispositif est selon l'une quelconque des revendications 1 à 10.

**Patentansprüche**

1. Torsionsdämpfungsvorrichtung (2), welche dazu bestimmt ist, mit einem Verbrennungsmotor verbunden zu werden, wobei diese Vorrichtung einen um eine Achse drehbeweglichen Träger (4) und eine Anordnung von pendelnden Schwungmassen (6, 8, 10, 30, 32), die beweglich auf diesem Träger (4) angebracht sind, umfasst, wobei jede der Schwungmassen der Anordnung in Umfangsrichtung zwischen einer ersten Schwungmasse, welche ihr benachbart ist, und einer zweiten Schwungmasse, welche ihr benachbart ist, angeordnet ist und mit diesen zwei benachbarten Massen eine Gruppe von drei in Umfangsrichtung aufeinander folgenden Schwungmassen bildet, die der Anordnung angehören, im Weiteren dazwischenliegende Masse (6), erste benachbarte Masse (8) und zweite benachbarte Masse (10) genannt, wobei jede der Schwungmassen der Anordnung auf dem Träger (4) mittels eines einzigen Wälzelements (12), das dieser Schwungmasse zugeordnet ist, beweglich angebracht ist, und wobei für jede Gruppe von drei in Umfangsrichtung aufeinander folgenden Schwungmassen die dazwischenliegende Masse (6) umfasst:

- einen ersten Endrand (14), der dafür ausgelegt ist, bei einer Drehung der Vorrichtung in Gleitkontakt, im Wesentlichen in Umfangsrichtung, mit einem Endrand (16) der ersten benachbarten Masse (8) zu kommen;
- einen zweiten Endrand (18), der dafür ausgelegt ist, bei einer Drehung der Vorrichtung in Gleitkontakt, im Wesentlichen in Umfangsrichtung, mit einem Endrand (20) der zweiten benachbarten Masse (10) zu kommen,

wobei der Endrand (20) der ersten benachbarten Masse oder der zweiten benachbarten Masse (10) bei einer Drehung der Vorrichtung für das radiale Halten des ersten bzw. des zweiten Endrandes (18) der dazwischenliegenden Masse (6) ausgelegt ist, und wobei für jede der Schwungmassen das Wälzelement auf dem Träger und auf der Schwungmasse rollt.

2. Vorrichtung nach Anspruch 1, wobei für jede Schwungmasse das zugeordnete einzige Wälzelement (12) dafür ausgelegt ist, auf einer Laufbahn (22) dieser Schwungmasse zu rollen, wobei die Spur der Kontaktpunkte zwischen dem Wälzelement (12) und der Laufbahn (22) in einer zur Achse senkrechten Ebene einen Mittelpunkt (A) umfasst, welcher in Bezug auf den Massenmittelpunkt (M) der Schwungmasse winkelmäßig versetzt ist.

3. Vorrichtung nach Anspruch 2, wobei jeder Punkt der Spur in Bezug auf den Massenmittelpunkt (M) der Schwungmasse in ein und derselben Umfangsrichtung winkelmäßig versetzt ist.

4. Vorrichtung nach einem der Ansprüche 2 und 3, wobei der Mittelpunkt (A) und vorzugsweise jeder Punkt der Spur, die einer Schwungmasse (6) entspricht, für alle Schwungmassen (6, 8, 10, 30, 32) in derselben Umfangsrichtung versetzt ist.

5. Vorrichtung nach einem der Ansprüche 2 bis 4, wobei für jede dazwischenliegende Masse (6):

   - der Mittelpunkt (A) der Spur in Richtung ersten benachbarten Masse (8) versetzt ist;
   - der erste Endrand (14) ein Rand ist, der bei einer Drehung der Vorrichtung für das radiale Halten des Endrandes (16) der ersten benachbarten Masse (8) ausgelegt ist;
   - der Endrand (20) der zweiten benachbarten Masse (10) ein Rand ist, der bei einer Drehung der Vorrichtung für das radiale Halten des zweiten Endrandes (18) der dazwischenliegenden Masse (6) ausgelegt ist.

6. Vorrichtung nach Anspruch 5, wobei für eine dazwischenliegende Masse (6) und vorzugsweise für jede Schwungmasse (6, 8, 10, 30, 32) die folgende Beziehung erfüllt ist:

$$0,5 \times R1 < R2 < 2 \times R1,$$

wobei:

   R1 der Krümmungsradius der Spur am Mittelpunkt (A) ist,
   R2 der Krümmungsradius des Endrandes (20) der zweiten benachbarten Masse (10) am Kontaktpunkt mit dem zweiten Endrand (18) der dazwischenliegenden Masse (6) ist, wenn sich das Wälzelement (12) mit dem Mittelpunkt (A) in Kontakt befindet.

7. Vorrichtung nach einem der Ansprüche 2 bis 5, wobei für eine Schwungmasse und vorzugsweise für jede Schwungmasse die folgende Beziehung erfüllt ist:

$$2 \; C_H \times D_M < F_C \times d < 5 \; C_H \times D_M,$$

wobei:

   - $F_C$ die Zentrifugalkraft ist, die bei einer Rotation der Vorrichtung mit 1000 Umdrehungen/Minute auf die Schwungmasse ausgeübt wird;
   - d der Abstand des Massenmittelpunktes (M) der Schwungmasse (6) von einer Achse ist, die, wenn sich das Wälzelement (12) mit dem Mittelpunkt (A) in Kontakt befindet, einerseits durch diesen Mittelpunkt (A) und andererseits durch einen Kontaktpunkt (E) des Wälzelements (12) mit dem Träger (4) verläuft;
   - $C_H$ die Reibungskraft der Schwungmasse (6) am Träger (4) bei einer maximalen axialen Beschleunigung des Trägers (4) ist, die durch die Schwingung der rotierenden Vorrichtung hervorgerufen wird;
   - $D_M$ (DM) der maximale Abstand des Massenmittelpunktes der Schwungmasse von einer Achse (YY) ist, die durch einen Kontaktpunkt (D) zwischen der Schwungmasse und dem Träger verläuft, wobei diese Achse (YY) senkrecht zu einer radialen Richtung in diesem Kontaktpunkt (D) ist.

8. Vorrichtung nach Anspruch 7, wobei für eine Schwungmasse und vorzugsweise für jede Schwungmasse d zwischen 2 mm und 12 mm und vorzugsweise zwischen 3,5 mm und 8 mm liegt.

9. Vorrichtung nach einem der vorhergehenden Ansprüche, wobei jede dazwischenliegende Masse (6) dafür ausgelegt ist, eine im Wesentlichen in Umfangsrichtung erfolgende Verschiebung bezüglich sowohl der ersten (8) als auch der zweiten (10) benachbarten Masse auszuführen, die zwischen 0,5 mm und 6 mm und vorzugsweise zwischen 1,5 mm und 3,5 mm beträgt.

10. Vorrichtung nach einem der vorhergehenden Ansprüche, wobei die Anzahl N der Schwungmassen (6, 8, 10, 30, 32) eine ungerade Anzahl ist, die größer oder gleich 3 und vorzugsweise gleich 5 oder gleich 7 ist.

11. Kupplung, welche eine Torsionsdämpfungsvorrichtung umfasst, wobei die Vorrichtung eine Vorrichtung nach einem der Ansprüche 1 bis 10 ist.

**Claims**

1. A torsional damping device (2) intended to be connected to a combustion engine, that device comprising a support (4) rotationally movable around an axis, and an assemblage of oscillating pendulum masses (6, 8, 10, 30, 32) mounted movably on that support (4), each of the oscillating masses of the assemblage being intercalated circumferentially between a first oscillating mass that is adjacent to it and a second oscillating mass that is adjacent to it, and forming with these two adjacent masses a group of three circumferentially consecutive oscillating masses belonging to said assemblage, hereinafter called respectively the intercalated mass (6), first adjacent mass (8), and second adjacent mass (8),
   in which each of the oscillating masses of the assemblage is mounted movably on the support (4) by means of a single bearing element (12) associated with that oscillating mass, and for any group of three circumferentially consecutive oscillating masses,
   the intercalated mass (6) comprises:

   - a first terminal edge (14) capable, during a rotation of the device, of coming into substantially circumferential sliding contact with a terminal edge (16) of the first adjacent mass (8);
   - a second terminal edge (18) capable, during a rotation of the device, of coming into substantially circumferential sliding contact with a terminal edge (20) of the second adjacent mass (10),

   the terminal edge (20) of the first adjacent mass or of the second adjacent mass (10) being capable, during a rotation of the device, of radial retention respectively of the first or of the second terminal edge (18) of the intercalated mass (6), and
   in which for each of the oscillating masses, the bearing element rolls on the support and on the oscillating mass.

2. The device according to Claim 1, in which for any oscillating mass the single associated bearing element (12) is capable of rolling on a bearing race (22) of that oscillating mass, the track of the contact points between the bearing element (12) and the bearing race (22) in a plane perpendicular to the axis comprising a median point (A) that is offset angularly with respect to the center of mass (M) of the oscillating mass.

3. The device according to Claim 2, in which each point on said track is offset angularly in the same circumferential direction with respect to the center of mass (M) of the oscillating mass.

4. The device according to any one of Claims 2 and 3, in which the median point (A), and preferably any point on the track corresponding to an oscillating mass (6), is offset in the same circumferential direction for all the oscillating masses (6, 8, 10, 30, 32).

5. The device according to any one of Claims 2 to 4, in which, for any intercalated mass (6):

   - the median point (A) of the track is offset toward the first adjacent mass (8);
   - the first terminal edge (14) is an edge capable, during a rotation of the device, of radially retaining said terminal edge (16) of the first adjacent mass (8) ;
   - the terminal edge (20) of the second adjacent mass (10) is an edge capable, during a rotation of the device, of radially retaining the second terminal edge (18) of the intercalated mass (6).

6. The device according to Claim 5, in which the following condition is met for an intercalated mass (6) and preferably for any oscillating mass (6, 8, 10, 20, 32) :

$$0.5 \times R1 < R2 < 2 \times R1,$$

in which

   R1 is the radius of curvature of the track at the median point (A);

R2 is the radius of curvature of said terminal edge (20) of said second adjacent mass (10) at the contact point with the second terminal edge (18) of the intercalated mass (6) when the bearing element (12) is in contact with the median point (A).

7. The device according to any one of Claims 2 to 5, in which the following condition is met for an oscillating mass and preferably for any oscillating mass:

$$2 \; C_H \; \times \; D_M < F_C \times d < 5 \; C_H \times D_M,$$

where

- $F_C$ is the centrifugal force exerted on the oscillating mass during rotation of the device at 1000 rpm;
- d is the distance from the center of mass (M) of the oscillating mass (6) to an axis that, when the bearing element (12) is in contact with the median point (A), passes on the one hand through that median point (A) and on the other hand through an associated contact point (E) of the bearing element (12) with the support (4) ;
- $C_H$ is the frictional force between the oscillating mass (6) and the support (4) during a maximum axial acceleration of the support (4) caused by vibration of the device during rotation;
- $D_M$ (DM) is the maximum distance of the center of mass of the oscillating mass from an axis (YY) that passes through a contact point (D) between the oscillating mass and the support, that axis (YY) being perpendicular to a radial direction at that contact point (D).

8. The device according to Claim 7, in which, for an oscillating mass and preferably for any oscillating mass, d is between 2 mm and 12 mm, and preferably between 3.5 mm and 8 mm.

9. The device according to any of the preceding claims, in which any intercalated mass (6) is capable of performing a substantially circumferential deflection of between 0.5 and 6 mm, and preferably between 1.5 mm and 3.5 mm, with each of the first (8) and second (10) adjacent masses.

10. The device according to any one of the preceding claims, in which the number N of oscillating masses (6, 8, 10, 20, 32) is an odd number greater than or equal to 3, preferably equal to 5 or to 7.

11. A clutch comprising a torsional damping device, in which that device is in accordance with any one of Claims 1 to 10.

Fig. 1

Fig. 2

Fig. 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100122605 A
- GB 2413614 A

- DE 102011088925 A1
- DE 102009037481 A1